Europäisches Patentamt

European Patent Office

Office européen des brevets

(11) Publication number: **0 298 156**
**A2**

## EUROPEAN PATENT APPLICATION

(21) Application number: **87118167.3**

(22) Date of filing: **19.06.81**

(51) Int. Cl.⁴: **G06K 19/08 , G07F 7/08**

(30) Priority: **23.06.80 US 161838**

(43) Date of publication of application:
**11.01.89 Bulletin 89/02**

(60) Publication number of the earlier application in
accordance with Art.76 EPC: **0 155 982**

(84) Designated Contracting States:
**AT CH DE FR GB LI LU NL SE**

(71) Applicant: **LIGHT SIGNATURES, INC.**
**10000 Santa Monica Boulevard Suite 302**
**Los Angeles, CA 90067(US)**

(72) Inventor: **Goldman, Robert Norman**
**157 Lanipo Drive**
**Kailua, HI 96734(US)**

(74) Representative: **Körber, Wolfhart, Dr. et al**
**Patentanwälte Dipl.-Ing. H. Mitscherlich**
**Dipl.-Ing. K. Gunschmann Dr.rer.nat. W.**
**Körber Dipl.Ing. J. Schmidt-Evers Dipl.-Ing.**
**W. Melzer Steinsdorfstrasse 10**
**D-8000 München 22(DE)**

(54) **Non-counterfeitable authentication card.**

(57) The invention relates to an authentication card
(210) and a process for producing such a card. The
card (210) comprises an anticounterfeit characteristic
readable by irradiation of the card, (personal) indicia
(212, 214) and a magnetic stripe.

At least a portion (D) of said indicia being posi-
tioned in the area of the anticounterfeit characteristic
which individually is altered by said indicia.

FIG. I

## NON-COUNTERFEITABLE AUTHENTICATION CARD

Background and Summary of the Invention

A growing need exists for authentication cards for use in various specific applications to segregate counterfeits, imitations or fakes from genuine articles.

In addition to commercial products, authentication is important in a variety of other applications as for commercial paper, identification cards, documents of value, and so on. As disclosed herein, the system of the present invention may be variously implemented to authenticate a wide range of subjects, including people.

Technological background of the invention is represented by prior art as follows:

The US-patents 3,412,493 (French) and 4,034,211 (Hurst) disclose the technique of securing printed material by underlying surface treatment. The French patent mentions the age-old use of a complex line and curve pattern as remains common practice for bank cheques. The Hurst patent mentions an erasable material.

This known technique of underprinting with an erasable substance may be somewhat effective for use with bank cheques, however, it is susceptible to photographic reproduction. Overstrikes are possible to accomplish fraudulent alterations.

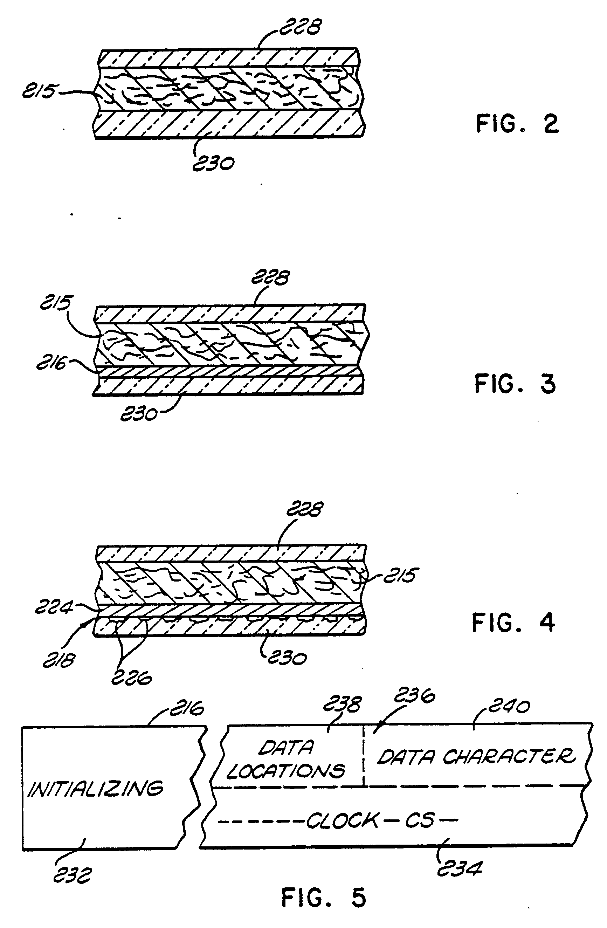

An addendum embodiment of the French patent (Fig. 4) suggests overstamping printed material with a defraction pattern which has the same shape as the printed indicia that is to be protected.

Further prior art is disclosed in the US-patent 4,034,211 (Hurst) which discloses an identification card and involves the use of optical gradings. These are embossed to provide specific codes. According to Fig. 3 of this patent, the area of gradings shows an encircled letter of number. However, these encircled areas are simply reference values illustrative in the drawing and not present in the physical structure. Each grading fully occupies the somewhat square area depicted. The encircled number appears only in the drawing.

The US-patent 4,527,051 (Stenzel) discloses a card with an anticounterfeit characteristic confirmed to a narrow line so as to avoid location problems. There is also printing deposited over the line so as to add character. The line of anticounterfeit substance is to be made as narrow as possible.

It is an object of the present invention to provide an authentication card which has high reliability, garanties maximum security and is easy to read.

The invention is characterised by the claim 1 and the claim 11, respectively.

With an authentication card according to the invention, the data representations relating to the individual holder of the card are formed and placed in the anticounterfeit area. Similar identifying data is recorded on the magnetic stripe. Later (unallowed) modifications (erasures, alterations, e.g. overstrikes) will tend to further change the anticounterfeit characteristic in an easily recognizable manner.

Irradiation is used to read the card whereby further modifications of the data become apparent.

The invention employs select physical phenomena that characterize objects. Consider an example. The pattern of translucency variation in a sheet of ordinary bond paper may be seen by exposing the sheet to back lighting. Of course, such a randomly occurring pattern can be altered, for example, as by adding printing; however, the random character of the non-printed portion of the medium cannot be duplicated by a practicable effort. The present invention is based upon utilizing such a medium having characteristic for identification.

To consider another example, randon variations in the reflectivity of a medium may be used as a characteristic.

The medium may, for example, comprise: part of a product, part of a tag attached to a product, part of an identification device, part of a document of value, and so on. As a further aspect of the present discovery, the system may be implemented so that only a portion of the medium is utilized, and the location of that select portion is pres erved in secrecy along with the measured characteristic.

As disclosed in detail below, the system hereof may be variously implemented using different media and techniques.

Brief Description of the Drawings

In the drawings, which constitute a part of this specification, exemplary embodiments of the invention are set forth as follows:

Fig. 1 is a plan view of an identification card of the present invention implemented for use in accordance with the present invention;

Fig. 2, 3 and 4 are sectional views taken through the card of Fig. 1, respectively along lines 2-2, 3-3 and 4-4;

Fig. 5 is a fragmentary diagrammatic view of a recording format on the card of Fig. 1;

Fig. 6 is a block diagram of a system for utilizing the card of Fig. 1;

Fig. 7 is a diagrammatic view of a component of the system of Fig. 6.

Description of the Illustrative Embodiments

As indicated above, detailed illustrative embodiments of the present invention are disclosed herein. However, physical identification media, data formats, and operating systems structured in accordance with the present invention may be embodied in a wide variety of forms, some of which may be quite different from those of the disclosed embodiments. Consequently, the specific structural and functional details disclosed herein are merely representative; yet in that regard, they are deemed to afford the best embodiment for purposes of disclosure and to provide a basis for the claims herein which define the scope of the present invention.

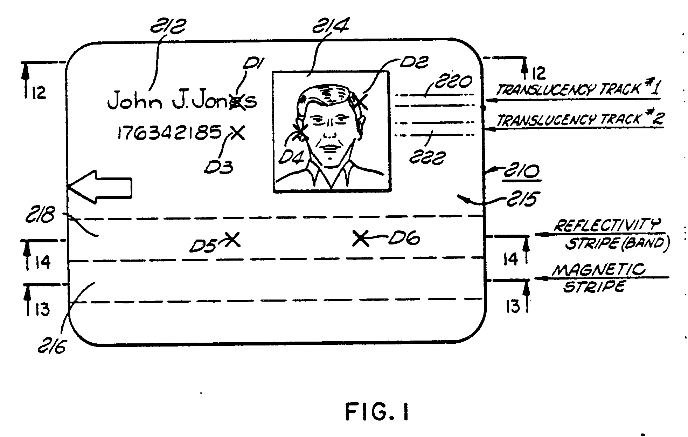

The system of the present invention can be effectively used to implement a reliable identification card as illustrated in Fig. 1 and which will now be considered in detail.

The card 210 is a laminate article incorporating a basic sheet, e.g. bond paper 215 (see Fig. 1, 2 and 3), along with certain other media for verification indications.

Considering the format of the card 210 (Fig. 1), assume for example that it is adapted for use as a form of personal identification. Of course, certain of the aspects as disclosed herein may be readily adopted for use in a wide variety of documents including passports, valuable paper, authenticators, and so on.

In the illustrative form, the card 210 carries print 212 (upper left) indicating the name of the assigned holder along with a photographic likeness 214 (right). The print 212 and the likeness 214 may be variously deposited or printed on a sheet of bond paper 215 (Fig. 2). Generally, the print 212 and the likeness 214 alter the translucency of the bond paper 215 in certain specific areas. In general, overlays, erasures or other modifications of the print 212 or the likeness 214 will tend to further alter the translucency of the paper 215 at points of alteration.

In general, in accordance herewith the translucency of predetermined areas involving the print 212 or the likeness 214 is sensed and provided as a record for authenticating the card 210.

In the authenticator embodiment of Fig. 1, the verification confirmation information is recorded on a magnetic stripe 216 which may also provide various other information.

In the present embodiment, the magnetic stripe 216 incorporates a clock track which not only indexes another magnetic track of the stripe 216 but additionally indexes non-magnetic areas of the card 210 for critical characteristic observations. The characteristic observations include translucency. Additionally, the card 210 incorporates a stripe or band 218 for indicating still another characteristic. Specifically, the band 218 provides dimensional reflectivity variations as a characteristic imposing an exceedingly severe burden for any effort at duplication.

The card 210 might be carried by the assigned holder for identification. An initial confirmation of the holder could be made simply by comparing the likeness 214 on the card with the holder's physical appearance. Confirmation of the card 210 and the absence of modification would then be checked by an apparatus constructed in accordance with the present invention as described in detail below. Generally, checking is performed by scanning the card horizontally along several paths. Specifically, the card 210 is scanned for translucency readings along the paths 220 and 222 (translucency tracks 1 and 2) for characteristic data indicative of the bond paper 216 in composite with the print 212 or the likeness 214. Additionally, the card 210 is scanned along the magnetic stripe 216 to obtain confirmatory data. The data from the magnetic stripe designates selected locations along the paths 220 and 222 for translucency observations. The data may also indicate the values of prior observations as well as personal identification data for a subject or holder and data on the extent or limits of use of the card.

The structure of the card 210 includes means for a further confirmation of the authenticity, and is therefore adapted for exceedingly high reliability. Specifically, the card 210 incorporates a band 218 (reflectivity stripe) in the form of a layer of foil 224 (Fig. 4) carrying sand-like particles 226. The observed characteristic of the band 218 involves light reflectivity at particular locations. Data indicative of such characteristics are confirmed by apparatus somewhat similar to that employed for confirming the propriety of the translucency observation as mentioned above.

Considering the structural form of the card 210 in somewhat greater detail, the full area of the card is occupied by the bond paper 215 (Fig. 1, 2 and 3) and a pair of external clear plastic sheet laminates 228 and 230.

In addition to sealing the bond sheet 215, the laminates 228 and 230 also enclose the magnetic stripe 216 and the reflectivity band 218. In general, techniques for the production of laminate identification cards incorporating stripes, e.g., magnetic stripes, are well known.

Turning now to the data format of the card 210 of Fig. 1, the magnetic stripe 216 involves two recording tracks as well known in the prior art. Of course, additional tracks (also as well known) may be incorporated in alternative embodiments. One of the magnetic recording tracks is a dedicated clock track while the other track carries the following data: the locations of select characteristic areas along the paths 220 and 222; location data for the reflectivity stripe or band 218; values of the characteristics at the specified locations; and optional data including personal identification numbers, account numbers, use records, and so on.

To pursue a specific example of a card format, assume that data locations D1 and D2 (indicated by "X") are assigned in the translucency track 1 (path 220) and locations D3 and D4 (similarly indicated) are assigned in the translucency track 2 (path 222). Again, these locations are indicated by an "X" symbol on the drawing.

Further, assume that data locations D5 and D6 are assigned in the reflectivity band 218. Accordingly, the preliminary processing of the card would involve sensing the characteristic translucency at data locations D1, D2, D3, and D4 and the reflectivity at locations D5 and D6. Data indicating the locations (encoded if desired) along with the observed values of translucency and reflectivity is encoded on the magnetic stripe 216.

To verify a card, a preliminary visual observation might be made concerning the likeness 214 and the identification of the print 212. If such indicators appear satisfactory, machine verification may be pursued to indicate the possibility of either a counterfeit card or an altered card. Specifically, the measurable but not substantially duplicable characteristics at locations D1, D2, D3, D4, D5 and D6 are sensed and compared with the data registered from a prior sensing of such locations. If the card 210 has been modified (as in the likeness 214) or is a forgery, on a statistical basis, it is exceedingly unlikely that the comparative standard will be attained. For even further confirmation regarding the propriety of the card holder, a personal identification number test, may be incorporated in the magnetic stripe 218 as well known in the prior art.

Prior to considering the system for processing the illustrative card 210, a preliminary consideration of the recording format on the magnetic stripe 216 will be helpful. Reference now will be to Fig. 5. The initial portion of the magnetic stripe 216 is dedicated to initializing the operation in cooperation with a magnetic card reader. Accordingly, an initializing section 232 occupies the leading edge of the stripe (left as illustrated). Beyond the initializing section - 232, the lower portion of the stripe 216 records clock signals CS in a track 234 while the upper portion records data in a track 236.

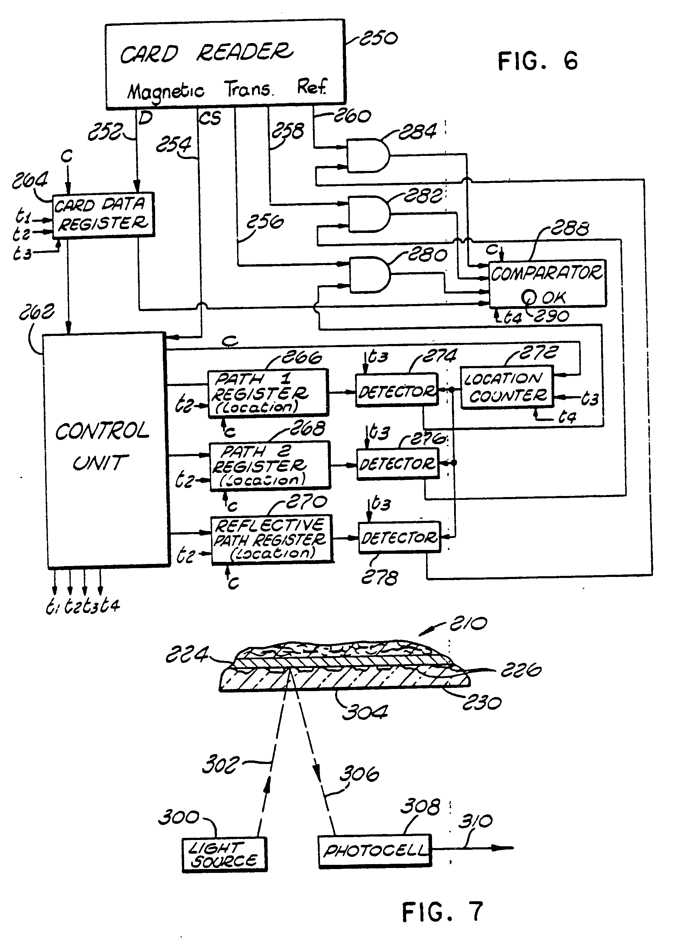

In the described embodiment, the first section 238 of the data track 236 specifies the data locations D1-D6 of interest for the card. Following the section 238 (left to right) in the data track 236 is a section 240 for recording the data characters, i.e. the characteristics sensed at the locations D1-D6. In the operation of the system, the data in the magnetic location 238 and the clock track 234 locate the points or locations D1-D6 for sensing. the characteristics observed at such points or locations on the card 210 are then compared with recorded data characters provided from the section 240 which were recorded at the time of the initial sensing. Of course, on any selected basis of criteria, as explained above, the comparison will either indicate the card's authenticity a failure of confirmation. Consideration will now be directed to the structure of Fig. 6 which performs the test as generally indicated above.

A card reader 250 (top left) may take any of a variety of forms for sensing the data as described above from the card 210 (Fig. 1). Specifically, the card reader 250 incorporates: (1) apparatus for sensing translucency along the paths 220 and 222, (2) structure for reading the magnetic stripe 216 as well known in the prior art, (3) apparatus for sensing reflectivity along the band 218, and (4) an analog-to-digital converter to convert observed analog translucency and reflectivity readings to a digital format. A form of reflectivity sensing apparatus is disclosed in detail below. The card 210 may be automatically moved through the card reader 250. Alternatively, the card reader 250 may be a manually operated sensing device wherein a person simply pushes the card 210 through an elongate slot. A form of the latter device for sensing a magnetic stripe is disclosed in U.S. Patent 3,914,789, Cocker, Jr. et al.

The outputs from the card reader 250 include: signals D and CS representative of data and clock signals from the magnetic stripe 216 (carried on lines 252 and 254); data representative of the translucency along paths 220 and 222 (carried in lines 256 and 258); and a reflectivity signal sensed along the band 218 (carried in line 260).

The clock signals CS (line 254) are applied to a control unit 262 for developing refined clock signals C. The clock signals C are supplied to each of the functional components of the system; however, in the interest of simplification, connection lines are not illustrated.

The operating sequence of the system of Fig. 6 is controlled and regulated by timing signals t1-t4 from the control unit 262 along with the clock signals C. The timing signals t1-t4 are developed by the control unit 262, using the clock signals C and the data signals D.

After the initializing operation, the binary timing signal t1 is applied to a card data register 264. Under the control of the signals t1 and C, the register 264 receives the record from the data track 236 (Fig. 5). Of course, the magnetic data stripe information may vary as suggested above, however, the portion thereof pertinent to the embodiment of Fig. 6 is utilized to specify the locations D1-D6 and the characteristic measurements at such locations. The data locations from the section 238 (Fig. 5) are specified by signals applied from the register 264 to the control unit 262 during timing signal t2.

Some decoding may be performed on the data location signals as disclosed above with regard to earlier embodiments, however, depending upon the format employed, any of a variety of specific signals may be supplied from the control unit 262 during the interval of binary timing signal t2, to specify the data location D1-D6.

Signals representative of the locations D1 and D2 (for path 220) are provided from the control unit 262 to a register 266. Somewhat similarly, location signals for the recording path 222 are placed in a register 268 and location signals for the reflectivity band 218 are provided in a register 270. As a consequence, after the transfer during the interval of timing signal t2, the register 266 contains two values to indicate the locations D1 and D2 of the translucency track 1, i.e., path 220. Somewhat similarly, the register 268 contains values indicative of the locations D3 and D4 on the translucency track 2, i.e., path 222. Finally, the register 270 holds values representative of the locations D5 and D6 along the reflectivity band 218.

In essence, the values from the registers 266, 268 and 270 are tested against the accumulated values in a clock pulse counter 272 to indicate the instants when the locations D1-D6 are being sensed to thereby command selection of the current values detected from the sensing as the selected data characters.

The instant position of the card 210 (as it is sensed in the card reader 250) is manifest by a location counter 272 which receives clock pulses during the timing interval of the signal t3. Essentially, the tally or accumulated count in the counter 272 indicates the relative displacement of a card 210 in the card reader 250, thereby indicating the position of the sensing apparatus with respect to the locations D1-D6.

The accumulated count value from the location counter 272 is applied to digital coincidence detectors 274, 276 and 278 which also receive timing signals t3 and signal-represented values from the registers 266, 268 and 270. Upon detecting a coincidence between received sets signals, each detector 274, 276 and 278 provides the high level of a binary output signal to qualify a gate indicating that a critical location (D1, D2, D3, D4, D5 or D6) is currently being sensed and the representative signal is to be gated for consideration.

Output signals from the detectors 274, 276 and 278 are connected respectively to "and" gates 280, 282 and 284. The "and" gates 280 and 282 receive the translucency signals in lines 256 and 258 respectively and are qualified at the critical point in time (space) to supply the observed values at the locations D1, D2, D3 and D4 (see Fig. 1). The "and" gate 284 receives the reflected signal value and is qualified at the instants for observation of locations D5 and D6.

The signals manifesting observations from the locations D1-D6 are supplied from the "and" gates 280, 282 and 284 to a comparator 288 which is also connected to receive signals from the register 264 representative of the data characters from section 240 (Fig. 5) of the magnetic stripe 218.

As described above, the comparator 288 receives six signal-represented values digitally representative of prior observations of the select characteristics at locations D1-D6 from the register 264. The comparator 288 also receives fresh data of the same nature from a current sensing of the card 210 through the gates 280, 282 and 284. The comparator 288 then compares the two sets of data (recorded and fresh) in accordance with a predetermined logic pattern and utilizes the comparison on a statistical basis for indicating the authenticity of the card in question as described in detail above. Of course, the authenticator 288 may utilize a variety of comparative techniques some of which have been explained above with respect to prior embodiments of the present invention. If a card 210 in question is resolved to be authentic or genuine, then a lamp 290 on the comparator is illuminated. Alternately, the comparing means may simply comprise two displays or registers with the operator then making a visual observation of the degree of coincidence between freshly sensed and prerecorded values.

To consider a specific examplary operation of the system of Fig. 5, assume the existence of a card 210 precisely as illustrated in Fig. 1 with the data locations D1-D6 sensed and appropriately recorded on the magnetic stripe 216 along with other specific data. Further assume that the card 210, so recorded, is presented for authentication by an apparatus constructed in accordance with Fig. 6. By way of example, assume the following relative characteristic values exist at the data locations:

| D1 | 3 |
| D2 | 7 |
| D3 | 2 |
| D4 | 5 |
| D5 | 1 |
| D6 | 6 |

With the movement of the assumed card 210 through the card reader 250, it is scanned from left to right (as illustrated) so that sensors pass over each of the horizontal sections of interest. At the outset of such scanning, the magnetic stripe 216 is sensed for an initializing operation in the control unit 262 as well known in the prior art for synchronizing the sensed clock signals CS with respect to the production of the timing clock signal C. After the brief initializing period, the clock pulses C are provided with space-related regularity throughout the balance of the card scanning operation.

After initializing, data is sensed by the card reader from the magnetic track 236 (Fig. 5). Specifically, values are provided from the first section 238 which specify the locations D1-D6 as by a numerical count of displacement along the card. Such data, along with the characteristic data from the track 236 is set in the card data register 264.

The control unit 262 receives the signal-represented data locations from the register 264, performs processing operations, and during the interval of the timing signal t2 sets the registers 266, 268 and 270 with two values each (in this example), which are independently supplied to the detectors 274, 276 and 278 during the interval of the timing signal t3. Specifically, the register 266 is set with values which are measured from a timing mark on the magnetic stripe 216 to initiate the interval of timing signal t3. Essentially, the data locations in the register 266 indicate the number of clock signals CS which lie in a horizontal path and offset the locations D1 and D2 from the starting or timing mark. Similar signal-represented values are set in the register 268 for the locations D3 and D4 as well as in the register 270 for the locations D5 and D6.

During the interval of operation (t3) the data values in each of the registers 266, 268 and 270 are continually compared with the incrementing number in the counter 272. That is, the counter 272 is actuated to count clock pulses C from the control unit 262 from the beginning of the timing signal t3. Thus, during the interval of the timing signal t3, the counter 272 specifies horizontal offsets for the locations D1-D6, which may be used according to the card format.

When the counter 272 attains a number equal to the horizontal offset for each of the locations D1-D6, one of the detectors 274, 276 or 278 signifies such an occurrence by qualifying one of the gates 280, 282 or 284 with the result that the observed analog signal (translucency or reflectivity sample) is gated to the comparator 288 perhaps to represent values of:

D1    3
D2    8

D3    2
D4    5
D5    2
D6    6

At the conclusion of the scanning of the card 210, currently sensed characteristic values (3, 8, 2, 5, 2, 6) from the locations D1-D6 are registered in the comparator 288. Also, the data from the magnetic stripe section 240 (D1-D6) are also registered in the comparator, i.e., 3, 7, 2, 5, 1, 6. During the interval t4, the two sets of data are compared for a degree of coincidence. Normally, any significant degree of coincidence between the freshly observed data and the previously observed data from the magnetic stripe will indicate that the card 210 is genuine and authentic. The small differences indicated in the exemplary data would likely be acceptable in most applications. However, in documents as the card 210, a higher degree of coincidence may be demanded to avoid acceptance of a modified document. In that regard, any change in the print 212 (Fig. 1) or the likeness 214 would likely be manifest by significant differences in the signals observed versus the signals recorded regarding the locations D1, D2 and D4.

While the above system selects the desired signals by direct gating, it will be apparent to those skilled in the art that an entire scanning of data could be sensed, sampled and converted as a basis for selective comparisons. Also, many different kinds of comparison techniques might well be employed, as for example amplitude ordering and mathematical manipulation and range comparisons, e.g., sum of squares comparisons.

For the reflectivity sensing, an exemplary structure is illustrated in Fig. 7. Specifically, the card 210 (illustrated fragmentarily) is moved transversely (to the right for example) in relation to a light source 300 which may, for example, comprise a low-power infrared laser to provide a beam 302 that is reflected from the card 210 as illustrated. A fragmentary or reflected beam 306 is detected by a photocell 308 which provides a representative analog signal in a conductor 310. Note that in the plane of the drawing of Fig. 7, i.e. the plane defined by the light source 300, the photocell 308 and the point of light incidence on the card 210 are at right angles to the motion of the card 210.

As the card 210 is effectivley scanned by the beam 302, considerable variation is imparted to the beam 306 in view of the sand-like particles 226 which obscure the foil 224. As a consequence, a random measurable but not practicably duplicable characteristic is provided.

In a refined embodiment of the structure of Fig. 7 the illustrated system is duplicated for dimensional sensing operation. Specifically, a second transverse light source and photocell reflectivity reader are placed with interchanged positional relationship to the source 300 and cell 308. In that manner, a single path is scanned from two different dimensional viewpoints. Consequently, the dimensional path has a sensed characteristic that would be substantially immune from reproduction using any known photographic or other techniques. Other reflecting techniques, as backscattering may well be adopted for use in a system as disclosed herein.

In accordance herewith, a number of other measurable but not practicably duplicable characteristics may be useful as the random data source. In that regard, paper smoothness, as well as the smoothness of other materials may be practical in a commercial system. Specifically, in that regard, an apparatus is available from Measurex Corporation (Model 2205) which is a smoothness sensor adaptable for providing an electrical signal indicative of a smoothness along a specific line of travel.

As will be readily appreciated from the above illustrative embodiments, the system hereof is susceptible to a great number of modifications and deviations within the basic conceptual framework. Accordingly, the scope hereof is deemed to be as set forth in the claims below.

## Claims

1. An authentication card (210) for the personal identification of an individual, comprising:
a sheet of medium (215) in a card form (210) with a dimensional anticounterfeit characteristic apparent with irradiation of a specific area of the card (210);
humanly perceivable indicia (212, 214) on said card representative of certain data relating specifically to said individual, said indicia (212, 214) being positioned on the card (210) so that at least a portion of the indicia (212, 214) is within said specific area and whereby said indicia (212, 214) alters said anticounterfeit characteristic at said specific area; and
a magnetic stripe (216) on said card recording other data relating to said individual.

2. An authentication card according to claim 1 wherein said magnetic stripe (216) is recorded with an account number for said individual.

3. An authentication card according to claim 1 or 2 wherein said magnetic stripe (216) is recorded with personal identification data for said individual.

4. An authentication card according to claim 1, 2 or 3 wherein said magnetic stripe (216) is recorded with a personal identification number for said individual.

5. An authentication card according to claim 1, 2, 3 or 4 wherein said magnetic stripe (216) is recorded with values of prior observation regarding said individual.

6. An authentication card according to claim 1, 2, 3, 4 or 5 wherein said account number is recorded along with data relating to the extent of use of said card (210).

7. An authentication card according to anyone of the claims 1 to 6 wherein said account number is recorded along with data relating to the limits of use of said card (210).

8. An authentication card according to anyone of the claims 1 to 7 wherein said magnetic stripe (216) is located separate from said specific area.

9. An authentication card according to anyone of the claims 1 to 8 wherein said sheet of medium includes at least one laminate at said specific area of said card (210).

10. An authentication card according to anyone of the claims 1 to 9 wherein said indicia on the card (210) is humanly perceivable.

11. A process for producing a card for the personal identification of a specific individual, comprising the steps of:
providing a sheet of medium (215) in a card form (210) having a dimensional anticounterfeit characteristic apparent by irradiation of a specific area of said card (210);
providing a magnetic stripe (216) on the card (21) remote from said specific area;
formulating individual data regarding the specific individual to be identified by the card (210);
depositing or printing indicia (212, 214) on the card (210) representative of certain of said individual data as formulated, said indicia (212, 214) being positioned on the card (210) so that at least a portion thereof is within said specific area of the card (210) and whereby said indicia (212, 214) alters said anticounterfeit characteristic at said specific area and any change of said indicia will tend to further alter said anticounterfeit characteristic; and
recording certain of said individual data on said magnetic stripe (216) as identification data for said individual.

12. A process according to claim 11 including the further step to verify the card (210) on observing the card (210) specifically and sensing said magnetic stripe (216) to manifest individual data.

13. A process according to claim 11 or 12 wherein said anticounterfeit characteristic is observed by relative motion between the card (210) and a source of light.

14. A process according to claim 11, 12 or 13 wherein said step of providing a sheet of medium comprises laminating said medium to provide the card (210).

FIG. 1

228

215

230

FIG. 2

228

215

216

230

FIG. 3

228

224

215

218

226

230

FIG. 4

216

238    236    240

DATA
LOCATIONS    DATA CHARACTER

INITIALIZING

------CLOCK—CS—

232    234

FIG. 5

FIG. 6

CARD READER

Magnetic Trans. Ref.

250

264 → CARD DATA REGISTER

252 D
254 CS
C
t1
t2
t3

256
258
260

284
282
280

288
COMPARATOR
OK
290
C
t4

262

CONTROL UNIT

266
PATH 1 REGISTER (Location)
t2
C

268
PATH 2 REGISTER (Location)
t2
C

270
REFLECTIVE PATH REGISTER (Location)
t2
C

C

t3
274
DETECTOR

t3
276
DETECTOR

t3
DETECTOR
278

272
LOCATION COUNTER
t3
t4

t1 t2 t3 t4

FIG. 7

210
224
226
230
304

302
306

300
LIGHT SOURCE

308
PHOTOCELL
310